# EUROPÄISCHE PATENTSCHRIFT

(11) **EP 2 900 415 B1**
(45) Veröffentlichungstag und Bekanntmachung des Hinweises auf die Patenterteilung: **01.03.2017**
(21) Anmeldenummer: 13774605.3
(22) Anmeldetag: 26.09.2013
(51) Int. Cl.: B23K 37/02, B23K 37/04, B23K 26/08, B23K 26/38, B23K 37/047

(54) **VERFAHREN UND VORRICHTUNG ZUR BEARBEITUNG VON NICHT-ROTATIONSSYMMETRISCHEN WERKSTÜCKEN MITTELS LASERSTRAHLUNG**
METHOD AND DEVICE FOR MACHINING NON-ROTATIONALLY SYMMETRICAL WORKPIECES BY MEANS OF A LASER BEAM
PROCÉDÉ ET DISPOSITIF POUR L'USINAGE DE PIÈCES NON SYMÉTRIQUES EN ROTATION PAR RAYONNEMENT LASER

(30) Priorität: 28.09.2012 DE 102012109245
(43) Veröffentlichungstag der Anmeldung: 05.08.2015
(73) Patentinhaber: JENOPTIK Automatisierungstechnik GmbH, 07745 Jena (DE)
(72) Erfinder: VOGT, Stefan, 07749 Jena (DE); DÖRING, Thomas, 07751 Sulza (DE); GEIPEL, Pierre, 07551 Gera (DE); MICHEL-TRILLER, Robert, 07745 Jena (DE)
(74) Vertreter: Schaller, Renate
(86) Internationale Anmeldenummer: PCT/EP2013/002883
(87) Internationale Veröffentlichungsnummer: WO 2014/048567

(56) Entgegenhaltungen:
- WO-A1-2013/030328
- DE-A1- 19 814 272
- JP-A- S6 356 386
- JP-A- H03 216 286
- JP-A- 2003 046 009
- JP-A- 2010 221 251
- US-A1- 2009 249 606

## Beschreibung

Die Erfindung betrifft eine Vorrichtung zur Bearbeitung von Werkstücken mittels Laserstrahlung und ein Verfahren zur Bearbeitung von dreidimensionalen, nicht rotationssymmetrischen Werkstücken mittels Laserstrahlung gemäß dem Oberbegriff der Ansprüche 1 und 4 (siehe JP H03 216286) mit dem besondere technische Anforderungen bei der Bearbeitung von nicht-rotationssymmetrischen Werkstücken berücksichtigt werden.

Aus dem Stand der Technik sind Lösungen zur Bearbeitung von Werkstücken mittels Laserstrahlung bekannt, von denen hier lediglich beispielhaft die Schrift US 6,335,508 B1 genannt ist. Darin ist eine Zustellvorrichtung für Rohre beschrieben, die bei einer Bearbeitung von Rohren mittels Laserstrahlung verwendet werden kann. Mittels mehrerer Transportvorrichtungen wird ein rotationssymmetrisches Rohr gehalten und entlang seiner Längsachse transportiert. Eine zusätzliche gesteuerte Rotation des Rohrs um seine Längsachse erlaubt es, das Rohr mittels eines Laserbearbeitungskopfs mit verschiedensten Schnittführungen zu bearbeiten.

Besondere Anforderungen an die Verfahrensführung und an die Gestaltung von Vorrichtungen zu Laserbearbeitung stellen sich dann, wenn nichtrotationssymmetrische Werkstücke zu bearbeiten sind. Um Schnitte entlang der vorgesehenen Bearbeitungslinien führen zu können, muss neben der Position die exakte räumliche Ausrichtung des Werkstücks bekannt sein. Während beispielsweise für die Bearbeitung eines rotationssymmetrischen Werkstücks die Kenntnis ausreichend ist, dass die Längsmittelachse des Werkstücks in einer bestimmten X-Y-Ebene liegt, muss bei einem nicht-rotationssymmetrischen Werkstück zusätzlich dessen Orientierung in der X-Y-Ebene (z. B. Orientierung von Vorder- bzw. Hinterende des Werkstücks) und die Ausrichtung des Werkstücks in Z-Richtung bekannt sein.

Es ist ferner bekannt, an nicht-rotationssymmetrischen Werkstücken, beispielsweise an gebogenen Rohren (z. B. DE 36 19 643 A1), Markierungen anzubringen, um eine Ortslage eines später an dem Rohr anzubringenden Gegenstands zu kennzeichnen. Dabei kann während oder nach dem Biegen des Rohrs in einer Biegemaschine die Markierung angebracht werden, solange sich das Rohr noch in der Biegemaschine befindet und daher die Position und die räumliche Ausrichtung des gebogenen Rohrs genau bekannt sind. Eine spätere Markierung ist nur möglich, wenn dass Rohr über bekannte Streckenlängen und mit bekannten Drehwinkel transportiert wurde und dadurch weiterhin die Position und die räumliche Ausrichtung des nicht-rotationssymmetrischen Rohrs (Werkstücks) genau bekannt sind. Nach einer Entnahme des Werkstücks aus der Biegemaschine ist eine räumliche Ausrichtung des Werkstücks, und damit z. B. der Lage und Richtung der Bearbeitungslinien, nur noch mit aufwendiger Messtechnik (z. B. 3-D Scannern) möglich. Eine nachfolgend weitere Bearbeitung des Werkstücks erfordert daher aufwendige, zeit- und rechenintensive Ermittlungen der räumlichen Ausrichtung des Werkstücks, wodurch die erforderlichen Taktzeiten zur Bearbeitung eines einzelnen Werkstücks erhöht werden.

Der Erfindung liegt die Aufgabe zugrunde, eine Möglichkeit zur Bearbeitung von nicht-rotationssymmetrischen Werkstücken vorzuschlagen, bei dem neben einem geringen messtechnischen Aufwand geringe Taktzeiten erreichbar sind.

Die Aufgabe wird durch eine Vorrichtung zur Bearbeitung von Werkstücken mittels Laserstrahlung gemäß Anspruch 1 erfüllt.

Als Werkstücke werden in dieser Beschreibung allgemein zu bearbeitende Materialien, z. B. Rohmaterialien wie Bleche, Rohre oder Profile, sowie Halbzeuge und fertiggestellte Produkte verstanden.

In einer einfachen Ausführung ist die Bereitstellungseinrichtung durch eine Anordnung von Halterungen gebildet, die so geformt und angeordnet sind, dass ein Werkstück nur in einer einzigen räumlichen Ausrichtung in die Halterungen einlegbar ist. Da die Position der Halterungen bekannt sind, sind die auch die räumliche Ausrichtung und die Bereitstellungsposition eines in die Halterungen eingelegten Werkstücks eindeutig bestimmt.

Die Bereitstellungseinrichtung kann eine solche Anzahl von Halterungen aufweisen, dass zeitgleich mehrere Werkstücke gehalten werden können. Es ist auch möglich, dass die Halterungen so gestaltet sind, dass verschiedenartige Werkstücke gehalten werden können. Vorteilhaft ist letztere Ausführung beispielsweise dann, wenn aus einem Halbzeug als erstes Werkstück durch die Bearbeitung ein oder mehrere zweite Werkstücke entstehen und diese nachfolgend ebenfalls mit der erfindungsgemäßen Vorrichtung bearbeitet werden sollen.

In weiteren Ausführungen können die Halterungen auch so gestaltet sein, dass Werkstücke gehalten werden können, die nicht durch Bearbeitungsschritte auseinander hervorgegangen sind.

Der Bearbeitungskopf steht vorzugsweise mit einer Laserquelle der Bearbeitungseinrichtung in Verbindung und weist Einrichtungen zur Strahlführung und Strahlformung auf. Er ist über Motoren und eine Steuerung gesteuert bewegbar. In weiteren Ausführungen der erfindungsgemäßen Vorrichtung kann der Bearbeitungskopf um bis zu sechs Freiheitsgrade, nämlich entlang der X-, Y- und Z-Achsen eines kartesischen Koordinatensystems beweglich sowie um die genannten Achsen drehbar sein. Der Bearbeitungskopf kann also dreh-und schwenkbar sein.

Die Zustelleinrichtung, insbesondere die Greifvorrichtung, ist vorzugsweise in sechs Freiheitsgraden gesteuert bewegbar.

Eine Spanneinrichtung kann jede Einrichtung sein, die zum Halten eines Werkstücks geeignet ist. Beispielsweise können Spanneinrichtungen Spannfutter, konische Aufnahmen oder sonstige kraft- und / oder formschlüssige Einrichtungen zum Halten von Werkstücken sein. Es können in weiteren Ausführungen der erfindungsgemäßen Vorrichtung mehrere Spanneinrichtungen angeordnet sein. In einer bevorzugten Ausführung sind zwei Spanneinrichtungen vorhanden. Eine oder mehrer Spanneinrichtungen können rotierbar sein, d.h. ein eingespanntes Werkstück ist um mindestens eine Achse der Spanneinrichtung rotierbar.

Unter eine Bearbeitungsposition im Sinne der Beschreibung wird ein Bereich verstanden, über den eine Bearbeitung des Werkstücks durch den Bearbeitungskopf stattfinden kann. Beispielsweise kann eine Bearbeitung eines in einer Spanneinrichtung gehaltenen Werkstücks entlang von Bearbeitungslinien des Werkstücks erfolgen.

Die erste Bearbeitungsposition ist vorzugsweise durch eine definierte räumliche Ausrichtung und Position der Greifvorrichtung gegeben. Beispielsweise kann durch die Greifvorrichtung ein Werkstück gehalten sein, das durch den Bearbeitungskopf entlang von Bearbeitungslinien bearbeitet, z. B. abgeschnitten, perforiert, gebohrt oder modelliert, werden soll. Diese Bearbeitungslinien können zwar von der Greifvorrichtung, z. B. 20 bis 100 cm, beabstandet sein, jedoch ist aufgrund der bekannten räumlichen Ausrichtung und Position des Werkstücks zu der Greifvorrichtung auch die räumliche Ausrichtung und Position jeder Bearbeitungslinie genau bekannt.

Es ist daher ein Vorteil der erfindungsgemäßen Vorrichtung, dass auf messtechnische Einrichtungen verzichtet werden kann, durch die z. B. eine räumliche Ausrichtung des Werkstücks während des Zustellens oder an der Bearbeitungsposition erfasst, kontrolliert und gegebenenfalls korrigiert werden kann.

Durch die erfindungsgemäße Vorrichtung sind vorteilhaft mindestens zwei verschiedene Bearbeitungspositionen für nur einen Bearbeitungskopf geschaffen worden. Dadurch wird es ermöglicht, dass der Bearbeitungskopf einer Bearbeitungsposition zugestellt ist, während einer anderen Bearbeitungsposition durch die Zustelleinrichtung ein Werkstück zugestellt wird.

In einer günstigen Ausführung der Vorrichtung kann eine Fördereinrichtung vorhanden sein, durch die bearbeitete Werkstücke abtransportiert werden. Die Werkstücke können einer nachfolgenden Bearbeitung außerhalb der Vorrichtung zugeführt werden. Sie können aber auch einer weiteren Bearbeitung durch die Vorrichtung wieder zur Verfügung gestellt werden.

In einer weiteren Ausführung der Vorrichtung können auch mehrere Zustelleinrichtungen, Bearbeitungseinrichtungen oder Spanneinrichtungen, sowie Kombinationen daraus vorhanden sein. Diese können parallel zueinander betrieben sein. Sie können aber auch gesteuert so interagieren, dass z. B. durch eine Zustelleinrichtung an mehrere oder wechselnde Spanneinrichtungen Werkstücke zustellbar sind oder ein Bearbeitungskopf wechselnden Bearbeitungspositionen zustellbar ist. Dadurch wird die Flexibilität des Einsatzes der Vorrichtung erhöht. Vorzugsweise ist eine Steuerung vorhanden, durch die mindestens die Zustelleinrichtung und die Bearbeitungseinrichtung ansteuerbar sind. Es ist günstig, wenn Betriebszustände von Zustelleinrichtung und Bearbeitungseinrichtung gegeneinander abgeglichen werden, um auch über längere Zeiträume der Verfahrensdurchführung eine gleichbleibend hohe Präzision aller Bewegungen und Verfahrensschritte zu gewährleisten.

Die erfindungsgemäße Vorrichtung kann zur Bearbeitung von nicht rotationssymmetrischen Werkstücken mittels Laserstrahlung verwendet werden.

Die Aufgabe wird ferner durch ein Verfahren zur Bearbeitung von nicht rotationssymmetrischen Werkstücken mittels Laserstrahlung gemäss Anspruch 4 gelöst. Das Verfahren beinhaltet die folgenden Schritte:
a) Bereitstellen eines Halbzeugs als ein erstes Werkstück mit einer definierten räumlichen Ausrichtung und Bereitstellungsposition;
b) Ergreifen des ersten Werkstücks mittels einer Greifvorrichtung einer Zustelleinrichtung,
c) Zustellen des ersten Werkstücks zu einer ersten Bearbeitungsposition mittels der Greifvorrichtung, wobei das erste Werkstück frei im Raum gehalten wird,
d) Zustellen eines Bearbeitungskopfes einer Bearbeitungseinrichtung zu der ersten Bearbeitungsposition und Bearbeiten des ersten Werkstücks, wobei die Schritte c) und d) mehrfach durchgeführt werden können,
e) Freigeben des bearbeiteten ersten Werkstücks;
f) Bereitstellen mindestens eines zweiten Werkstücks in einer definierten räumlichen Ausrichtung und Bereitstellungsposition;
g) Ergreifen des zweiten Werkstücks und Zustellen des zweiten Werkstücks zu einer weiteren Bearbeitungsposition mittels der Greifvorrichtung, wobei das zweite Werkstück mittels einer Spanneinrichtung an der weiteren Bearbeitungsposition gehalten wird;
h) Zustellen des Bearbeitungskopfes zu der weiteren Bearbeitungsposition und Bearbeiten des zweiten Werkstücks und
i) Freigeben des bearbeiteten zweiten Werkstücks.

Die Schritte a) bis i) sind nicht zwingend in der oben angegebenen Reihenfolge durchzuführen. Einzelne oder mehrere Schritte können auch ein- oder mehrfach wiederholt werden, wenn dies einem fehlerfreien technischen Ablauf des erfindungsgemäßen Verfahrens nicht zuwider läuft. Es ist auch möglich, Schritte des erfindungsgemäßen Verfahrens gleichzeitig auszuführen, wodurch Reduzierungen der Taktzeiten und / oder eine verbesserte Auslastung einer zur Verfahrensdurchführung verwendeten Vorrichtung erreichbar sind.

Vorzugsweise werden die Werkstücke und der Bearbeitungskopf mit einer Toleranz von weniger als 0,1 mm den Bearbeitungspositionen zugestellt.

Das erfindungsgemäße Verfahren ist vorzugsweise so gestaltet, das zeitgleich mit den Schritten a) bis c) auch die Schritte h) und i) ausgeführt werden. Dadurch ist vorteilhaft erreicht, dass die in weiteren Bearbeitungspositionen befindlichen zweiten Werkstücke bearbeitet und freigegeben werden, während durch den Greifroboter ein erstes Werkstück der ersten Bearbeitungsposition zugestellt wird. Durch eine solche Verfahrensführung werden unproduktive Standzeiten der Bearbeitungseinrichtung reduziert.

Sind in der Bereitstellungseinrichtung mehrere erste Werkstücke bereitgestellt oder erfolgt Schritt a) bereits während einer der Schritte c) bis e), können die Schritte b) und c) zeitgleich mit den Schritten h) und i) ausgeführt werden.

Ferner ist es möglich, dass die Schritte g) und h) zeitgleich durchgeführt werden, wenn mindestens zwei weitere Bearbeitungspositionen vorhanden sind und die Bewegungsabläufe der Greifeinrichtung und der Bearbeitungseinrichtung nicht kollidieren. Es ist dann möglich, dass ein zweites Werkstück eine weiteren Bearbeitungsposition zugestellt wird, während ein anderes zweites Werkstück an einer anderen weiteren Bearbeitungsposition durch den Bearbeitungskopf bearbeitet wird.

Es ist ferner günstig, wenn vor der Durchführung des Verfahrens mit den wiederholten Schritten a) bis i) bereits einmal der Schritt g) ausgeführt wird, um die Spanneinrichtungen vorab bereits zu bestücken.

Die Erfindung wird nachfolgend anhand von Ausführungsbeispielen und Abbildungen näher erläutert. Es zeigen:
Fig. 1 eine schematische Darstellung eines Bearbeitungsraums mit einer Ausführung der erfindungsgemäßen Vorrichtung in einer ersten Betriebsstellung in der Draufsicht;
Fig. 2 eine schematische Darstellung einer Bereitstellungseinrichtung mit einem ersten Werkstück;
Fig. 3 eine schematische Darstellung eines Bearbeitungsraums mit der Ausführung der erfindungsgemäßen Vorrichtung in einer zweiten Betriebsstellung in der Draufsicht.

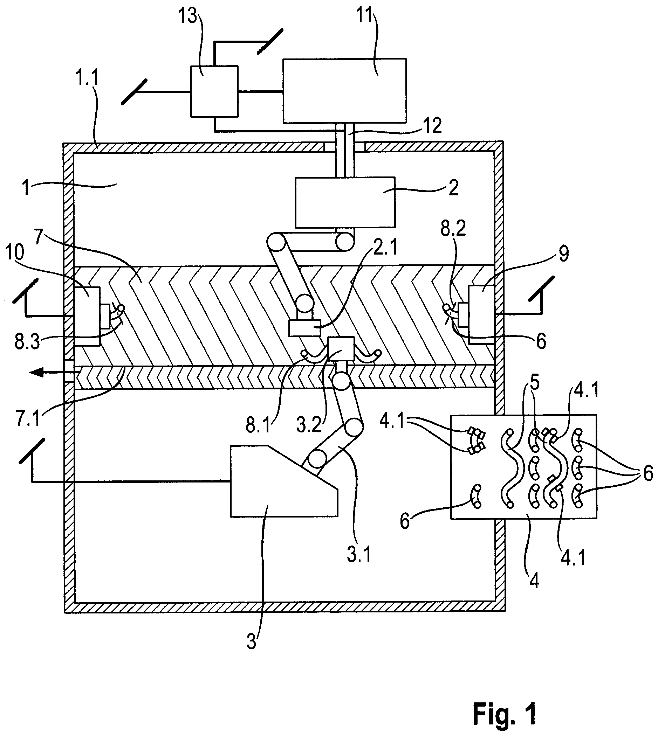

In Fig. 1 ist eine Ausführung der erfindungsgemäßen Vorrichtung gezeigt, deren wesentliche Elemente eine Bearbeitungseinrichtung 2 mit Bearbeitungskopf 2.1, eine Zustelleinrichtung 3 mit Greifvorrichtung 3.2, eine Bereitstellungseinrichtung 4 sowie eine erste Spanneinrichtung 9 und eine zweite Spanneinrichtung 10 sind.

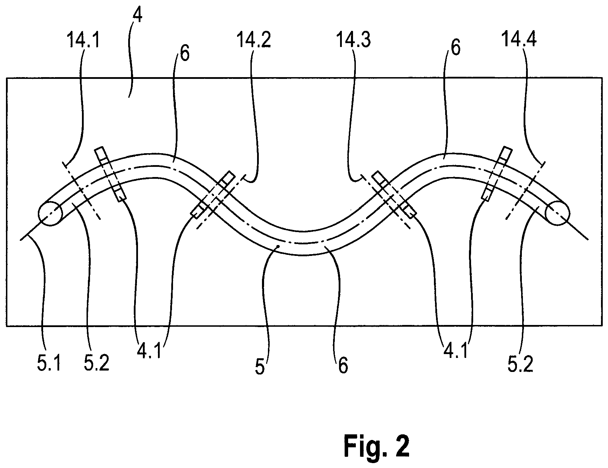

Die wesentlichen Elemente der Vorrichtung sind in einem Bearbeitungsraum 1 angeordnet, dessen Wand 1.1 so aufgebaut ist, dass ein Austritt von Laserstrahlung nach Außen verhindert ist. Die Zustelleinrichtung 3 ist als ein Greifroboter mit einem Greifarm 3.1 und der Greifvorrichtung 3.2 ausgestaltet. Der Greifarm 3.1 weist mehrere Gelenke (angedeutet) auf und ist entlang aller drei Raumachsen beweglich. Durch die tatsächlich möglichen Bewegungen und Reichweiten der Zustelleinrichtung ist ein Zugriffsbereich der Zustelleinrichtung 3 gegeben, innerhalb dem durch die Greifvorrichtung 3.2 erste und zweite Werkstücke 5, 6 ergriffen, gehalten und bewegt werden können. In der Fig. 1 sind der Greifarm 3.1 und die Greifvorrichtung 3.2 in den Bearbeitungsraum 1 gerichtet. In der Greifvorrichtung 3.2 ist ein erstes Werkstück 5 gehalten. Dieses erste Werkstück 5 ist durch die Zustelleinrichtung 3 so in dem Betriebsraum 1 gehalten, dass es nur mit der Greifvorrichtung 3.2 in Berührung steht und das erste Werkstück 5 einer ersten Bearbeitungsposition 8.1 (durch eine Strichlinie symbolisiert) so zugestellt ist, dass eine erste Bearbeitungslinie 14.1 (siehe Fig. 2) des ersten Werkstücks 5 an die erste Bearbeitungsposition 8.1 gebracht ist. Die erste Bearbeitungslinie 14 ist eine virtuelle Linie, entlang der das erste Werkstück 5 durch den Bearbeitungskopf 2.1 mittels Laserstrahlung (nicht gezeigt) abzuschneiden ist. Da das erste Werkstück 5 ein gebogenes Rohr ist, muss der tatsächliche Schnitt natürlich um den Umfang des ersten Werkstücks 5 geführt werden, wobei die erste Bearbeitungslinie 14.1 als Projektion dieses Schnitts verstanden werden kann.

Der Bearbeitungskopf 2.1 ist der ersten Bearbeitungsposition 8.1 zugestellt. Eine Bearbeitung des ersten Werkstücks 5 an der ersten Bearbeitungsposition 8.1 ist möglich. Die Laserstrahlung ist durch eine Laserquelle 11 bereitgestellt, die außerhalb des Bearbeitungsraums 1 angeordnet ist. Über eine Strahlzuführung 12 in Form eines Lichtleitkabels ist die Laserstrahlung von der Laserquelle 11 zum Bearbeitungskopf 2.1 geführt, um dort auf das erste Werkstück 5 gerichtet werden zu können.

Etwa auf der horizontalen Höhe der ersten Bearbeitungsposition 8.1 sind sich gegenüberliegend eine erste Spanneinrichtung 9 und eine zweite Spanneinrichtung 10 an der Wand 1.1 angeordnet. Jede der Spanneinrichtungen 9, 10 verfügt über Spannmittel (nur angedeutet), mit denen jeweils ein zweites Werkstück 6 gehalten werden kann. Durch die erste Spanneinrichtung 9 ist eine zweite Bearbeitungsposition 8.2 und durch die zweite Spanneinrichtung 10 ist eine dritte Bearbeitungsposition 8.3 definiert.

Unterhalb der ersten und zweiten Spanneinrichtung 9, 10 und der ersten Bearbeitungsposition 8.1 ist ein Förderband als eine Fördereinrichtung 7 vorhanden, dessen Förderrichtung (durch Pfeil angegeben) von der ersten Spanneinrichtung 9 in Richtung der zweiten Spanneinrichtung 10 weist. Das Förderband ist in Förderrichtung asymmetrisch V-fömig eingesenkt gestaltet. Dadurch ist am tiefsten Punkt der Einsenkung eine Förderrinne 7.1 ausgebildet, die in Förderrichtung verläuft. Die asymmetrische Gestaltung ist in Fig. 1 durch die asymmetrische Lage der Förderrinne 7.1 gezeigt. Ein auf das Förderband fallender Körper bewegt sich aufgrund der Schwerkraft in die Förderrinne 7.1 und kann von dort an einem Durchbruch der Wand 1.1 aus dem Bearbeitungsraum 1 ausgeschleust werden. Das Förderband läuft innerhalb des Bearbeitungsraums 1 um.

In weiteren Ausführungen der erfindungsgemäßen Vorrichtung kann die Fördereinrichtung 7 auch symmetrisch gestaltet sein. Die Fördereinrichtung 7 kann auch durch den Durchbruch der Wand 1.1 hindurchgeführt sein.

Innerhalb eines Zugriffbereichs der Zustelleinrichtung 3 ist die Bereitstellungseinrichtung 4 angeordnet. Diese reicht über einen Teil ihrer Ausdehnung durch einen Durchbruch (angedeutet) in der Wand 1.1 in den Bearbeitungsraum 1 hinein. Auf der Bereitstellungseinrichtung 4 sind Halterungen 4.1 (nur einige gezeigt) vorhanden, deren Anordnung und Dimensionierung so gewählt ist, dass in den Halterungen 4.1 erste Werkstücke 5 und zweite Werkstücke 6 in genau bekannten Bereitstellungspositionen und räumlichen Ausrichtungen gehalten werden können (siehe Beschreibung zu Fig. 2).

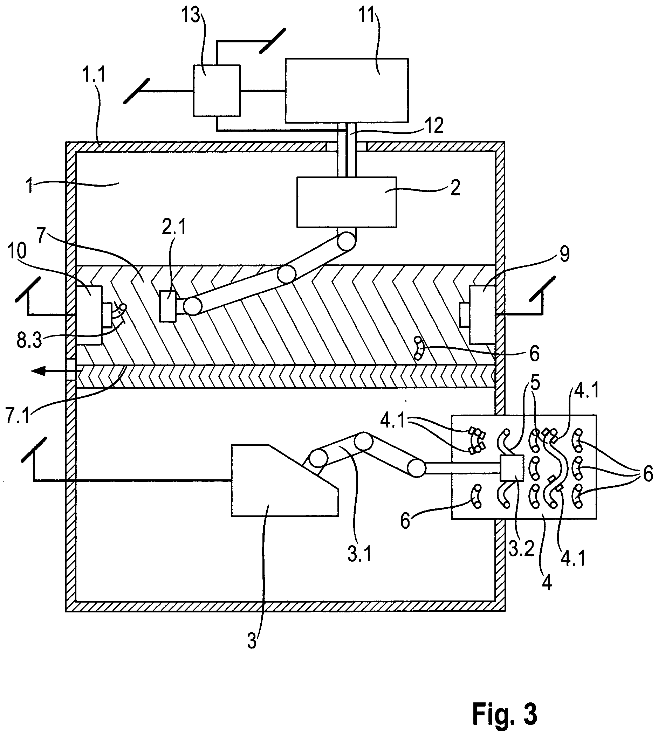

Eine Ausführung der Bereitstellungseinrichtung 4 ist in Fig. 2 gezeigt. Die Halterungen 4.1 sind als Stege mit halbrunden Aufnahmebereichen (nicht gezeigt) ausgeführt. Die Dimensionierung der Aufnahmebereiche sowie Anordnung der Halterungen 4.1 in Hinblick auf deren jeweilige Position und Ausrichtung erlaubt es, ein erstes Werkstück 5 nur in genau einer Bereitstellungsposition und mit genau einer räumlichen Ausrichtung in die Halterungen 4.1 einzulegen. Durch die Greifvorrichtung 3.2 (siehe Fig. 1 und 3) ist das erste Werkstück 5 beispielsweise im Bereich zwischen den mittleren Halterungen 4.1 ergreifbar.

Das erste Werkstück 5 ist ein Halbzeug in Form eines gebogenen Rohrs. Dieses ist nicht rotationssymmetrisch gestaltet, d.h. es kann nicht um seine Mittelachse 5.1 rotationssymmetrisch gedreht werden. Das erste Werkstück 5 ist nur in einer Ebene, in der auch die Mittelachse 5.1 liegt, zweidimensional gebogen. Senkrecht zu dieser Ebene ragt das erste Werkstück 5 jeweils lediglich mit seinem halben Querschnitt über.

In weiteren Ausgestaltungen der Bereitstellungseinrichtung 4 können die Halterungen 4.1 auch so gestaltet sein, dass dreidimensional geformte, z. B. gebogene, gepresste, gespritzte oder gegossene, erste Werkstücke 5 in genau einer Bereitstellungsposition und mit bekannter räumlicher Ausrichtung aufgenommen und gehalten werden können.

Zur Verdeutlichung sind Bearbeitungslinien 14.1 bis 14.4 gezeigt, entlang derer das erste Werkstück 5 später mittels der Laserstrahlung zerschnitten werden soll. An den beiden Enden des ersten Werkstücks 5 wird jeweils ein Randstück 5.2 entstehen. Die verbleibende Länge des ersten Werkstücks 5 wird durch zwei weitere Bearbeitungslinien 14.2 und 14.3 in drei Abschnitte unterteilt, die nach einem Abschneiden der Abschnitte als zweite Werkstücke 6 aus der Vorrichtung ausgeschleust und weiter bearbeitet werden können.

Figur 3 entspricht in allen gezeigten Elementen der Fig. 1. Dargestellt ist ein Betriebszustand der Vorrichtung, in dem ein auf der Bereitstellungseinrichtung 4 bereitgestelltes erstes Werkstück 5 durch die Zustelleinrichtung 3 ergriffen wird. Durch die Bearbeitungseinrichtung 2 wurde ein zweites Werkstück 6, das an der ersten Spanneinrichtung 9 gehalten war, bearbeitet. Das bearbeitete zweite Werkstück 6 ist durch die erste Spanneinrichtung 9 freigegeben worden und befindet sich auf der Fördereinrichtung 7. Der Bearbeitungskopf 2.1 ist der dritten Bearbeitungsposition 8.3 zugestellt.

Mittels einer Steuerung 13, die mit der Laserquelle 11, mit der Zustelleinrichtung 3, der Bearbeitungseinrichtung 2 und den Spanneinrichtungen 9, 10 verbunden ist, sind alle diese Elemente ansteuerbar und deren aktuelle Betriebszustände gegeneinander abgleichbar.

Eine mögliche Ausführungsvariante des erfindungsgemäßen Verfahrens soll anhand der Fig. 1 und 2 erläutert werden. In einem ersten Schritt werden erste und zweite Werkstücke 5, 6 auf der Bereitstellungseinrichtung 4 in die entsprechenden Halterungen 4.1 eingelegt, so dass diese jeweils eine eindeutige Bereitstellungsposition und räumliche Ausrichtung aufweisen. Durch die Zustelleinrichtung 3 wird mittels des Greifsarms 3.1 und der Greifvorrichtung 3.2 ein zweites Werkstück 6 ergriffen und der zweiten Spanneinrichtung 9 zugestellt und durch die zweite Spanneinrichtung 9 gehalten. Anschließend wird wiederum ein zweites Werkstück 6 ergriffen und der zweiten Spanneinrichtung 10 zugestellt und durch diese gehalten. Während dieser Zeit befindet sich der Bearbeitungskopf 2.1 an einer Position, die eine Kollision mit dem Greifarm 3.1 und der Greifvorrichtung 3.2 ausschließt. Durch die Zustelleinrichtung 3 wird nun ein erstes Werkstück 5 von der Bereitstellungseinrichtung 4 ergriffen. Da das erste Werkstück 5 in Bereitstellungsposition und räumlicher Ausrichtung bekannt ist und auch das Ergreifen des ersten Werkstücks 5 mittels der Greifvorrichtung 3.2 an einem bekannten Bereich des ersten Werkstücks 5 und aus einer bekannten, vorbestimmten Richtung erfolgt, ist auch eine bekannte Relativlage zwischen der Greifvorrichtung und dem Werkstück geschaffen. Das zweite Werkstück 5 wird der ersten Bearbeitungsposition 8.1 zugestellt und frei im Raum gehalten. Dabei wird die Relativlage zwischen der Greifvorrichtung 3.2 und dem ersten Werkstück 5 nicht verändert. Dadurch ist auch eine Relativlage zwischen dem ersten Werkstück 5, den Bearbeitungslinien 14 des ersten Werkstücks 5 und der ersten Bearbeitungsposition 8.1 bekannt. Durch die Greifvorrichtung 3.2 wird das erste Werkstück 5 so gehalten, dass sich eine erste Bearbeitungslinie 14.1 an der ersten Bearbeitungsposition 8.1 befindet. Nach der Zustellung des Bearbeitungskopfs 2.1 zur ersten Bearbeitungsposition 8.1 fährt dieser die erste Bearbeitungslinie 14.1 mit der Laserstrahlung ab und schneidet das eine Randstück 5.2 von dem ersten Werkstück 5 ab. Dabei fährt der Bearbeitungskopf 2.1 in einer Richtung etwas mehr als die halbe Strecke der ersten Bearbeitungslinie 14.1 ab. Anschließend wird die erste Bearbeitungslinie 14.1 in der anderen Richtung über etwa die halbe Strecke der ersten Bearbeitungslinie 14.1 abgefahren, wobei sich beide Streckenüberfahrten so überlappen, dass eine vollständige Trennung des einen Randstücks 5.2 vom ersten Werkstück 5 erzielt wird. Das Randstück 5.2 fällt auf die Fördereinrichtung 7, wird durch die Schwerkraft in die Förderrinne 7.1 bewegt und aus dem Bearbeitungsraum 1 ausgeschleust. Anschließend wird die Position der Greifvorrichtung 3.2 so verändert, dass die zweite Bearbeitungslinie 14.2 der ersten Bearbeitungsposition 8.1 zugestellt ist. Der Vorgang des Abschneidens wird wiederholt und ein zweites Werkstück 6 wird als ein Abschnitt des ersten Werkstücks 5 abgeschnitten. Dieses wird ebenfalls aus dem Bearbeitungsraum 1 ausgeschleust und außerhalb des Bearbeitungsraums 1 weiter bearbeitet. Das weiter bearbeitete zweite Werkstück 6 wird über einen nicht dargestellten Mechanismus wieder in die Bereitstellungseinrichtung 4 eingelegt.

Das Schneiden des ersten Werkstücks 5 wird solange wiederholt, bis alle Bearbeitungslinien 14.1 bis 14.4 vollständig abgefahren wurden. Dabei wird die Greifvorrichtung 3.2 zur Zustellung der Bearbeitungslinien 14.3 und 14.4 um 180 Grad gedreht, so dass der Bearbeitungskopf 2.1 an der ersten Bearbeitungsposition 8.1 verbleiben kann. Sind alle Schnitte erfolgt, gibt die Greifvorrichtung 3.2 den noch gehaltenen Abschnitt des ersten Werkstücks 5 frei und dieser fällt auf die Fördereinrichtung 7.

Danach wird durch die Zustelleinrichtung wieder ein erstes Werkstück 5 auf der Bereitstellungseinrichtung 4 ergriffen und der ersten Bearbeitungsposition 8.1 zugestellt. Währendessen wird der Bearbeitungskopf 2.1 der zweiten Bearbeitungsposition 8.2 zugestellt und bearbeitet das dort befindliche zweite Werkstück 6. Nach Beendigung der Bearbeitung wird das bearbeitete zweite Werkstück 6 von der ersten Spanneinrichtung 9 freigegeben und fällt auf die Fördereinrichtung 7.

Der Bearbeitungskopf 2.1 wird wieder der ersten Bearbeitungsposition 8.1 zugestellt und das dort befindlichen erste Werkstück 5 wird bearbeitet. Während durch die Zustelleinrichtung 3 erneut ein erstes Werkstück 5 aus der Bereitstellungseinrichtung 4 ergriffen wird, wird der Bearbeitungskopf 2.1 der dritten Bearbeitungsposition 8.3 zugestellt und bearbeitet das dort befindliche zweite Werkstück 6. Anschließend erfolgt wieder eine Bearbeitung eines ersten Werkstücks 5, wie oben beschrieben. Nach dieser Bearbeitung befinden sich keine zweiten Werkstücke 6 mehr an der zweiten und dritten Bearbeitungsposition 8.2, 8.3. Durch die Zustellvorrichtung 3 wird nun wieder jeweils ein zweites Werkstück 6 an die zweite und dritte Bearbeitungsposition 8.2, 8.3 zugestellt. Der Bearbeitungskopf 2.1 ruht während dieser Zeit.

### Bezugszeichen

- 1: Bearbeitungsraum
- 1.1: Wand (des Bearbeitungsraums)
- 2: Bearbeitungseinrichtung
- 2.1: Bearbeitungskopf
- 3: Zustelleinrichtung
- 3.1: Greifarm
- 3.2: Greifvorrichtung
- 4: Bereitstellungseinrichtung
- 4.1: Halterung
- 5: erstes Werkstück
- 5.1: Mittelachse
- 5.2: Randstück
- 6: zweites Werkstück
- 7: Fördereinrichtung
- 7.1: Förderrinne
- 8.1: erste Bearbeitungsposition
- 8.2: zweite Bearbeitungsposition
- 8.3: dritte Bearbeitungsposition
- 9: erste Spanneinrichtung
- 10: zweite Spanneinrichtung
- 11: Laserquelle
- 12: Strahlzuführung
- 13: Steuerung
- 14: Bearbeitungslinie

## Patentansprüche

1. Vorrichtung zur Bearbeitung von Werkstücken (5, 6) mittels Laserstrahlung umfassend eine Zustelleinrichtung (3) zur Zustellung der Werkstücke (5, 6) zu wenigstens einer ersten Bearbeitungsposition (8.1) und mit einer Bearbeitungseinrichtung (2) aufweisend wenigstens einen Bearbeitungskopf (2.1) zur Bearbeitung eines der wenigstens einen ersten Bearbeitungsposition (8.1) zugestellten Werkstücks (5, 6), **dadurch gekennzeichnet,**
- **dass** die Zustelleinrichtung (3) ein Greifroboter mit einer Greifvorrichtung (3.2) ist, die für das Zustellen des ersten Werkstücks (5) zu der ersten Bearbeitungsposition (8.1) zustellbar ist, so dass das erste Werkstück (5) frei im Raum gehalten werden kann,
- **dass** der Bearbeitungskopf (2.1) um mindestens drei Freiheitsgrade beweglich ist,
- **dass** eine Bereitstellungseinrichtung (4) mit Halterungen (4.1) in einem Zugriffsbereich der Zustelleinrichtung (3) angeordnet ist und die Gestaltung und Dimensionierung der Halterungen (4.1) so gewählt ist, dass wenigstens ein in den Halterungen (4.1) gehaltenes Werkstück (5, 6) mit einer definierten räumlichen Ausrichtung und Position der Zustelleinrichtung (3) zur Entnahme aus den Halterungen (4.1) bereitgestellt ist;
- **dass** zwei Spanneinrichtungen (9, 10) zur Aufnahme eines durch die Zustelleinrichtung (3) zugestellten Werkstücks (5, 6) angeordnet sind,
wobei durch die erste der wenigstens zwei Spanneinrichtungen (9, 10) eine zweite Bearbeitungsposition (8.2) und durch die zweite Spanneinrichtung (10) eine dritte Bearbeitungsposition (8.3) definiert sind und
- **dass** der Bearbeitungskopf (2.1) der ersten, der zweiten und der dritten Bearbeitungspositionen (8.1, 8.2, 8.3) zur Bearbeitung des Werkstücks (5, 6) zustellbar ist.

2. Vorrichtung nach Anspruch 1, **dadurch gekennzeichnet, dass** die Halterungen (4.1) als Stege mit halbrunden Aufnahmebereichen ausgeführt sind, wobei die Aufnahmebereiche so dimensioniert und die Halterungen (4.1) so angeordnet sind, dass das Werkstück (5, 6) in Form eines gebogenen Rohres nur in genau einer räumlichen Ausrichtung in die Halterungen (4.1) eingelegt werden kann.

3. Vorrichtung nach einem der Ansprüche 1 oder 2, **dadurch gekennzeichnet, dass** keine messtechnischen Einrichtungen vorhanden sind, durch die eine räumliche Ausrichtung des Werkstücks (5, 6) während des Zustellens oder an einer der Bearbeitungspositionen (8.1, 8.2, ...) erfasst, kontrolliert und gegebenenfalls korrigiert werden kann.

4. Verfahren zur Bearbeitung von dreidimensionalen, nicht rotationssymmetrischen Werkstücken (5, 6) mittels Laserstrahlung mit den Schritten:
a) Bereitstellen eines Halbzeugs als ein erstes Werkstück (5) mit einer definierten räumlichen Ausrichtung und Bereitstellungsposition;
b) Ergreifen des ersten Werkstücks (5) mittels einer Greifvorrichtung (3.2) einer Zustelleinrichtung (3),
c) Zustellen des ersten Werkstücks (5) zu einer ersten Bearbeitungsposition (8.1) mittels der Greifvorrichtung (3.2), wobei das erste Werkstück (5) frei im Raum gehalten wird,
d) Zustellen eines Bearbeitungskopfes (2.1) einer Bearbeitungseinrichtung (2) zu der ersten Bearbeitungsposition (8.1) und Bearbeiten des ersten Werkstücks (5), wobei die Schritte c) und d) mehrfach durchgeführt werden können, gekenntzeichnet durch folgende Schritte :
e) Freigeben des bearbeiteten ersten Werkstücks (5);
f) Bereitstellen mindestens eines zweiten Werkstücks (6) in einer definierten räumlichen Ausrichtung und Bereitstellungsposition;
g) Ergreifen des zweiten Werkstücks (6) und Zustellen des zweiten Werkstücks (6) zu einer weiteren Bearbeitungsposition (8.2, 8.3) mittels der Greifvorrichtung (3.2), wobei das zweite Werkstück (6) mittels einer Spanneinrichtung (9, 10) an der weiteren Bearbeitungsposition (8.2, 8.3) gehalten wird;
h) Zustellen des Bearbeitungskopfes (2.1) zu der weiteren Bearbeitungsposition (8.2, 8.3) und Bearbeiten des zweiten Werkstücks (6) und
i) Freigeben des bearbeiteten zweiten Werkstücks (6).

5. Verfahren nach Anspruch 4, **dadurch gekennzeichnet, dass** zeitgleich mit den Schritten a) bis c) die Schritte h) und i) ausgeführt werden.

## Claims

1. A device for machining workpieces (5, 6) by means of laser radiation, said device comprising a feeding means (3) for feeding the workpieces (5, 6) to at least one first machining position (8.1) and with a machining means (2) comprising at least one machining head (2.1) for machining a workpiece (5, 6) fed to said at least one first machining position (8.1), **characterized in that**
- the feeding means (3) is a gripping robot with a gripping device (3.2) which can be fed in order to feed the first workpiece (5) to the first machining position (8.1) so that the workpiece (5) can be held freely in space,
- that the machining head (2.1) is movable about at least three degrees of freedom,
- that a supplying means (4) with holders (4.1) is arranged in an access area of the feeding means (3), the design and dimensions of the holders (4.1) being selected such that at least one workpiece (5, 6) held by the holders (4.1) is supplied with a defined spatial orientation and position of the feeding means (3) for removal from the holders (4.1);
- that two clamping means (9, 10) are arranged to receive the workpiece (5, 6) fed by the feeding means (3), wherein a second machining position (8.2) is defined by the first of the at least two clamping means (9, 10) and a third machining position (8.3) is defined by the second clamping means (10), and
- that the machining head (2.1) can be fed to the first, second and third machining positions (8.1, 8.2, 8.3) for machining of the workpiece (5, 6).

2. The device according to claim 1, **characterised in that** the holders (4.1) are provided as webs with semicircular receiving areas, the receiving areas being dimensioned such and the holders (4.1) being arranged such that the workpiece (5, 6) in the shape of a bent tube can be inserted into the holders (4.1) only in exactly one spatial orientation.

3. The device according to any one of claims 1 or 2, **characterised in that** no measuring means are provided to detect, control and, if necessary, correct a spatial orientation of the workpiece (5, 6) during feeding or at any of the machining positions (8.1, 8.2, ...).

4. A method for machining three-dimensional workpieces (5, 6) with no rotational symmetry by means of laser radiation, said method comprising the steps of:
a) providing a semi-finished product as a first workpiece (5) with a defined spatial orientation and providing position;
b) gripping the first workpiece (5) by means of a gripping device (3.2) of a feeding means (3),
c) feeding the first workpiece (5) to a first machining position (8.1) by means of the gripping device (3.2), said first workpiece (5) being held freely in space,
d) feeding a machining head (2.1) of a machining means (2) to the first machining position (8.1) and machining the first workpiece (5), wherein steps c) and d) can be performed several times, **characterized by** the steps of:
e) releasing the machined first workpiece (5);
f) providing at least a second workpiece (6) with a defined spatial orientation and providing position;
g) gripping the second workpiece (6) and feeding the second workpiece (6) to a further machining position (8.2, 8.3) by means of the gripping device (3.2), wherein the second workpiece (6) is held at the further machining position (8.2, 8.3) by clamping means (9, 10);
h) feeding the machining head (2.1) to the further machining position (8.2, 8.3) and machining the second workpiece (6), and
i) releasing the machined second workpiece (6).

5. The method according to claim 4, **characterised in that** steps h) and i) are performed at the same time as steps a) to c).

## Revendications

1. Dispositif d'usinage de pièces (5, 6) par rayonnement laser, comportant un moyen d'avancement (3) destiné à avancer les pièces (5, 6) jusqu'à au moins une première position d'usinage (8.1) et avec un moyen d'usinage (2) comportant au moins une tête d'usinage (2.1) destinée à usiner une pièce (5, 6) avancée vers l'au moins une première position d'usinage (8.1), ledit dispositif étant **caractérisé en ce que**
- le moyen d'avancement (3) est un robot de préhension avec un dispositif de préhension (3.2) que l'on peut avancer pour l'avancement de la première pièce (5) vers la première position d'usinage (8.1) de manière à pouvoir tenir la pièce (5) de manière libre dans l'espace,
- **en ce que** la tête d'usinage (2.1) est mobile autour d'au moins trois degrés de liberté,
- **en ce qu'**un moyen de mise à disposition (4) avec des supports (4.1) est disposé dans une zone d'accès du moyen d'avancement (3) et **en ce que** la réalisation et les dimensions des supports (4.1) sont choisies de manière à mettre à disposition au moins une pièce (5, 6) tenue dans les supports (4.1) avec une orientation et une position définies du moyen d'avancement (3) pour l'enlèvement à partir des supports (4.1);
- **en ce que** deux moyens de serrage (9, 10) destinés à recevoir une pièce (5, 6) avancée par le moyen d'avancement (3), le premier desdits au moins deux moyens de serrage (9, 10) définissant une deuxième position d'usinage (8.2) et le deuxième moyen de serrage (10) définissant une troisième position d'usinage (8.3), et
- **en ce que** la tête d'usinage (2.1) peut être avancée vers la première, la deuxième et la troisième position d'usinage (8.1, 8.2, 8.3) pour usiner la pièce (5, 6).

2. Dispositif selon la revendication 1, **caractérisé en ce que** les supports (4.1) sont réalisés sous forme de nervures avec des zones de logement demi-rondes, ces zones de logement étant dimensionnées et les supports (4.1) étant disposés de sorte que la pièce (5, 6) sous forme d'un tuyau coudé ne puisse être insérée dans les supports (4.1) que dans exactement une seule orientation spatiale.

3. Dispositif selon l'une quelconque des revendications 1 ou 2, **caractérisé en ce qu'**il n y a pas de moyens de mesure permettant de saisir, de contrôler ou, si nécessaire, de corriger une orientation spatiale de la pièce (5, 6) pendant son avancement ou à une des positions d'usinage (8.1, 8.2, ...).

4. Procédé d'usinage de pièces tridimensionnelles (5, 6), qui ne présentent pas de symétrie de rotation, par rayonnement laser, ledit procédé comportant les étapes de:
a) mettre à disposition un produit semi-fini comme première pièce (5), présentant une orientation spatiale et une position de mise à disposition définies;
b) prendre la première pièce (5) au moyen d'un dispositif de préhension (3.2) d'un moyen d'avancement (3),
c) avancer la première pièce (5) jusqu'à une première position d'usinage (8.1) au moyen du dispositif de préhension (3.2), ladite première pièce (5) étant tenue de manière libre dans l'espace,
d) avancer une tête d'usinage (2.1) d'un moyen d'usinage (2) jusqu'à la première position d'usinage (8.1) et usiner la première pièce (5), exécutant les étapes c) et d) plusieurs fois, ledit procédé étant **caractérisé par** les étapes de:
e) dégager la première piéce usinée (5);
f) mettre à disposition au moins une deuxième pièce (6) dans une orientation spatiale et une position de mise à disposition définies;
g) prendre la deuxième pièce (6) et avancer la deuxième pièce (6) jusqu'à une autre position d'usinage (8.2, 8.3) au moyen du dispositif de préhension (3.2), ladite deuxième pièce (6) étant tenue à ladite autre position d'usinage (8.2, 8.3) par un moyen de serrage (9, 10);
h) avancer la tête d'usinage (2.1) jusqu'à ladite autre position d'usinage (8.2, 8.3) et usiner la deuxième pièce (6), et
i) dégager la deuxième piéce usinée (6).

5. Procédé selon la revendication 4, **caractérisé en ce que** les étapes h) et i) sont exécutées en même temps que les étapes a) à c).
